# FASCICULE DE BREVET EUROPEEN

(11) **EP 1 272 678 B1**
(45) Date de publication et mention de la délivrance du brevet: **25.08.2004**
(21) Numéro de dépôt: 01923771.8
(22) Date de dépôt: 10.04.2001
(51) Int. Cl.: C22B 13/06, C22B 9/10, C22B 13/08

(54) **PROCEDE DE DEBISMUTHAGE DU PLOMB FONDU PAR ADDITION D'ALLIAGES CALCIUM-MAGNESIUM**
VERFAHREN ZUR ENTFERNUNG VON WISMUT AUS EINER BLEISCHMELZE DURCH ZUSATZ VON KALZIUM-MAGNESIUM-LEGIERUNGEN
METHOD FOR ELIMINATING BISMUTH FROM MOLTEN LEAD BY ADDING CALCIUM-MAGNESIUM ALLOYS

(30) Priorité: 13.04.2000 FR 0004773
(43) Date de publication de la demande: 08.01.2003
(73) Titulaire: SKW LA ROCHE DE RAME SAS, 05310 La Roche de Rame (FR)
(72) Inventeur: MAUGRAS, Cyprien, F-74190 Chedde (FR)
(74) Mandataire: Mougeot, Jean-Claude
(86) Numéro de dépôt international: PCT/FR2001/001083
(87) Numéro de publication internationale: WO 2001/079570

(56) Documents cités:
- EP-B- 0 343 012
- FR-A- 2 514 786
- FR-A- 2 764 905
- DATABASE WPI Section Ch, Derwent Publications Ltd., London, GB; Class M25, AN 1973-80191U XP002156417 & SU 378 469 A (NON-FERROUS METALS RES IN)

## Description

### Domaine de l'invention

L'invention concerne un procédé d'affinage du plomb fondu pour en éliminer le bismuth, utilisant du calcium et du magnésium.

### Etat de la technique

Le traitement du plomb par le calcium pour en éliminer le bismuth est connu depuis 1917, et a permis, dès cette époque, de réduire la teneur en bismuth à moins de 0,05%. Le brevet US 1428041 de Guillaume Kroll, déposé en 1920, décrivait déjà l'utilisation conjointe du calcium et du magnésium dans ce but, et a donné naissance ultérieurement au procédé Kroll-Betterton, qui est encore largement utilisé de nos jours. Il consiste en l'ajout simultané de calcium en morceaux et de magnésium en lingots. L'expérience a montré que la proportion la plus efficace de ces deux agents d'affinage était d'environ 1/3 de calcium pour 2/3 de magnésium.

La difficulté principale rencontrée lors de l'introduction de ces métaux dans le bain de plomb tient à l'importante différence de leur densité (1,5 pour Ca et 1,7 pour Mg) par rapport à celle du plomb (10,5), ce qui tend à les maintenir à la surface du bain et entraîne des pertes importantes par oxydation à l'air.

Un moyen de diminuer l'oxydation du calcium et du magnésium est d'utiliser des alliages Mg-Ca. Dès 1938, le brevet US 2129445 (American Metal Company) indiquait cette possibilité, et décrivait en particulier un alliage à 79,4% de magnésium et 20,6% de calcium. Le brevet EP 343012 (Timminco) couvre l'utilisation, pour cette application, d'un alliage Mg-Ca contenant de 65 à 75% de magnésium, et l'addition de cet alliage au bain de plomb à une température comprise entre 415 et 500°C, de sorte qu'il y ait dissolution de l'alliage sans fusion. L'utilisation d'un alliage de composition donnée présente l'inconvénient de ne pas pouvoir ajuster la proportion des réactifs en cours de traitement. Si on souhaite cependant procéder à cet ajustement, il est nécessaire d'utiliser en plus de l'alliage du calcium ou du magnésium pur.

Une autre solution pour éviter l'oxydation consiste à injecter les additifs sous forme de poudres. Le certificat d'utilité FR 2514786 (Extramet) décrit l'introduction du calcium et du magnésium sous forme d'un mélange de granules d'alliage Ca-Mg, par injection au moyen d'un gaz porteur inerte. Les granules sont, de préférence, un mélange de granules des deux alliages eutectiques du diagramme de phases Mg-Ca (alliages à 82% et à 16,2% Ca). La demande de brevet WO 98/59082 de la demanderesse décrit le traitement du plomb par un fil fourré à gaine fusible contenant un mélange de poudres de calcium et de magnésium. L'introduction des réactifs sous forme d'un mélange de poudres par injection ou par la technique du fil fourré ne permet pas non plus l'ajustement de leur proportion respective au cours du traitement.

L'invention a ainsi pour but de permettre un débismuthage efficace du plomb en utilisant le calcium et le magnésium sous des formes peu oxydables, tout en gardant la possibilité d'ajuster le rapport Ca/Mg en cours de traitement.

### Objet de l'invention

L'invention a pour objet un procédé de débismuthage du plomb par le magnésium et le calcium, dans lequel le magnésium et le calcium sont introduits sous forme de morceaux de deux alliages Mg-Ca, l'un à prédominance Mg, l'autre à prédominance Ca, présentant chacun une température de liquidus inférieure à 650°C, et de préférence à 600°C, et pour lequel les températures de liquidus des deux alliages sont voisines à moins de 20°C près. On obtient un traitement particulièrement efficace avec un alliage Mg-Ca proche de l'eutectique à 16,2% (en poids) de calcium et contenant de 12 à 25% de calcium, et un alliage Ca-Mg contenant entre 60 et 80% de calcium.

### Description de l'invention

En cherchant à combiner les avantages de l'utilisation d'alliages Mg-Ca, essentiellement une meilleure résistance à l'oxydation, et celui de l'utilisation de deux réactifs séparés, à savoir la possibilité d'ajustement du rapport Ca/Mg en cours de traitement, la demanderesse a d'abord eu l'idée de choisir des morceaux d'alliages de même composition que ceux décrits dans FR 2514786, c'est-à-dire les compositions eutectiques à 16,2 et 82% de calcium. Les essais faits avec ces alliages et avec des alliages de composition différente ont montré d'abord qu'on pouvait choisir une certaine plage de composition à la fois pour l'alliage pauvre en calcium, et pour l'alliage riche en calcium, à condition que la température de liquidus reste inférieure à 650°C, ce qui correspond à moins de 30% calcium pour l'alliage pauvre en calcium, et une plage de 60 à 90% pour l'alliage riche en calcium. La température de liquidus est, de préférence, inférieure à 600°C, soit environ de 8 à 25% de calcium pour l'alliage pauvre, et de 67 à 87% pour l'alliage riche. En fait, l'avantage des alliages n'est guère appréciable si la teneur en calcium ou en magnésium devient trop faible. Ainsi, les plages de teneurs efficaces sont de 12 à 25% pour l'alliage pauvre, et de 60 à 80% pour l'alliage riche. Pour obtenir un comportement comparable des deux alliages, il faut choisir des alliages avec une température de liquidus voisine, typiquement avec une différence de moins de 20°C.

Pour l'alliage pauvre en calcium, on peut se situer au voisinage de l'eutectique à 16,2%, dont la température de liquidus est à 516°C. Cette température de liquidus correspond, pour l'alliage riche, à environ 75% de calcium. Lorsque le traitement du plomb est pratiqué par immersion dans une cage métallique, le couple d'alliages ainsi défini est bien adapté, et on n'a pas intérêt à trop s'en éloigner pour ne pas faire le traitement à trop haute température. On peut définir une plage de teneur optimale de 12 à 20% Ca pour l'alliage pauvre, et de 70 à 77% pour l'alliage riche.

Par ailleurs, les expériences faites par la demanderesse ont montré que l'alliage eutectique à 82% de calcium présentait une tendance marquée à s'enflammer à l'air, que cette tendance décroissait avec la teneur en calcium, mais surtout qu'elle disparaissait de manière soudaine et inattendue pour une teneur en calcium d'environ 67%. Lorsque l'introduction des alliages dans le plomb se fait dans un vortex, cette tendance à s'enflammer à l'air est plus gênante, et il est préférable de choisir une teneur comprise entre 60 et 67% de calcium pour l'alliage riche, ce qui conduit à accepter une température de liquidus comprise entre 600 et 650°C. Dans ce cas, on a intérêt à s'éloigner un peu de la composition eutectique pour l'alliage pauvre, de manière à ne pas avoir une température de liquidus trop éloignée, la plage optimale de teneur en calcium se situant entre 20 et 25%.

Il est avantageux pour l'utilisateur que les deux alliages se présentent en lingots de taille ou de forme différente, de manière à les reconnaître facilement. La taille unitaire doit être appropriée pour obtenir aisément la proportion désirée entre le calcium et le magnésium, de l'ordre de 1/3 de calcium, et pour effectuer les corrections nécessaires en cours de traitement.

Contrairement à l'enseignement du brevet EP 343012 mentionné plus haut, on constate que ces alliages à point de fusion plus bas que les alliages à 30% de calcium, et qui fondent dans le plomb avant de se dissoudre, se dissolvent plus vite, et conduisent à un affinage plus rapide. De plus, contrairement à ce qu'on aurait pu craindre, l'introduction simultanée de deux alliages fusibles, dont la composition moyenne correspond à celle d'un alliage peu fusible, ne conduit pas à la formation d'une masse solide.

### Exemples

### Exemple 1

On a préparé un bain de 13 kg de plomb fondu à 480°C, dans lequel on a introduit 0,2% de bismuth. On y a ajouté 44,1 g de calcium en morceaux et 95,9 g de magnésium sous forme de lingots coupés à la scie à métaux. Les réactifs ont été immergés dans le plomb à l'aide d'une cage en acier. Le bain a été maintenu à 480°C pendant 4 h. Il est ensuite descendu en température jusqu'à 330°C pendant 1h. Le bain a été analysé toutes les demi-heures. La teneur en bismuth est passée de 0,2% en début de traitement à 0,1% au terme du maintien à 480°C et à 0,01% au terme du refroidissement à 330°C.

### Exemple 2

On a introduit la même quantité de calcium et de magnésium que dans l'exemple 1, mais sous forme de 140 g d'un alliage contenant, en poids, 33% de calcium et 67% de magnésium. La teneur en bismuth est passée de 0,2% en début de traitement à 0,1% au terme de 4 h de maintien à 480°C et à 0,01% au terme d'une heure de refroidissement à 330°C.

### Exemple 3

On a introduit la même quantité de calcium et de magnésium que dans l'exemple 1, mais sous forme de 102 g d'un alliage contenant 19% de calcium et 38 g d'un alliage contenant 65% de magnésium. La teneur en bismuth est passée de 0,2% en début de traitement à 0,1% après une demie heure de maintien à 480°C, puis à environ 0,06% après 4 h, et enfin à 0,01% au terme d'une heure de refroidissement à 330°C.

### Exemple 4

On a reproduit l'exemple 1 en limitant le temps de maintien à 480°C à 2 h. La teneur en bismuth est de 0,15% au terme de ce maintien, et de 0,05% au terme d'une heure de refroidissement ultérieur à 330°C.

### Exemple 5

On a reproduit l'exemple 2 en limitant le temps de maintien à 480°C à 2 h. La teneur en bismuth est de 0,1% au terme de ce maintien, et de 0,05% au terme d'une heure de refroidissement ultérieur à 330°C, comme dans l'exemple 4.

### Exemple 6

On a reproduit l'exemple 3 en limitant le temps de maintien à 480°C à 2 h. La teneur en bismuth est de 0,1% au terme de ce maintien, mais atteint 0,02% au terme d'une heure de refroidissement ultérieur à 330°C. On constate donc que l'addition simultanée de deux alliages selon l'invention permet d'obtenir, par rapport à l'art antérieur, un meilleur degré de débismuthage pour une même durée de traitement.

## Revendications

1. Procédé de débismuthage du plomb par le magnésium et le calcium, **caractérisé en ce que** le magnésium et le calcium sont introduits dans le bain à l'intérieur d'une cage sous forme de morceaux de deux alliages Mg-Ca, l'un contenant de 12 à 20% de Ca, l'autre de 70 à 77% de Ca, présentant chacun une température de liquidus inférieure à 650°C, et **en ce que** les températures de liquidus des deux alliages sont voisines à moins de 20°C près.

2. Procédé selon la revendication 1, **caractérisé en ce que** la température de liquidus des deux alliages est inférieure à 600°C.

3. Procédé de débismuthage du plomb par le magnésium et le calcium, **caractérisé en ce que** le magnésium et le calcium sont introduits dans le bain à l'aide d'un vortex sous forme de morceaux de deux alliages Mg-Ca, l'un contenant de 20 à 25% de Ca, l'autre de 60 à 67% de Ca, présentant chacun une température de liquidus inférieure à 650°C, et **en ce que** les températures de liquidus des deux alliages sont voisines à moins de 20°C près.

4. Procédé selon la revendication 3, **caractérisé en ce que** la température de liquidus des deux alliages est inférieure à 600°C.

5. Procédé selon l'une des revendications 1 à 4, **caractérisé en ce que** les morceaux de chacun des alliages sont de forme ou de taille différente.

## Patentansprüche

1. Verfahren zur Entfernung von Wismut aus Blei durch Magnesium und Kalzium, **dadurch gekennzeichnet, dass** das Magnesium und Kalzium in einem Käfig in Form von Stücken aus zwei Mg-Ca-Legierungen in die Schmelze eingebracht werden, von denen die eine Legierung 12 bis 20 % Ca, die andere 70 bis 77 % Ca enthält und die jeweils eine Liquidustemperatur unterhalb 650 °C aufweisen, und dass die Liquidustemperaturen der beiden Legierungen bis auf weniger als 20 °C ähnlich sind.

2. Verfahren nach Anspruch 1, **dadurch gekennzeichnet, dass** die Liquidustemperatur der beiden Legierungen unterhalb 600 °C liegt.

3. Verfahren zur Entfernung von Wismut aus Blei durch Magnesium und Kalzium, **dadurch gekennzeichnet, dass** das Magnesium und Kalzium mit einem Stromwirbel in Form von Stücken aus zwei Mg-Ca-Legierungen in die Schmelze eingebracht werden, von denen die eine Legierung 20 bis 25 % Ca, die andere 60 bis 67 % Ca enthält und die jeweils eine Liquidustemperatur unterhalb 650 °C aufweisen, und dass die Liquidustemperaturen der beiden Legierungen bis auf weniger als 20 °C ähnlich sind.

4. Verfahren nach Anspruch 3, **dadurch gekennzeichnet, dass** die Liquidustemperatur der beiden Legierungen unterhalb 600 °C liegt.

5. Verfahren nach einem der Ansprüche 1 bis 4, **dadurch gekennzeichnet, dass** die Stücke aus den jeweiligen Legierungen von unterschiedlicher Form und Größe sind.

## Claims

1. Method to eliminate bismuth from lead using magnesium and calcium, **characterised in that** the magnesium and calcium are introduced into the bath inside a cage in the form of lumps of two Mg-Ca alloys, one containing 12 to 20% Ca and the other 70 to 77% Ca, each having a liquidus point below 650°C, and **in that** the liquidus points of the two alloys are within less than 20°C of each other.

2. Method according to claim 1, **characterised in that** the liquidus points of the two alloys are below 600°C.

3. Method to eliminate bismuth from lead using magnesium and calcium, **characterised in that** magnesium and calcium are introduced into the bath using a vortex in the form of lumps of two Mg-Ca alloys, one containing 20 to 25% Ca and the other 60 to 67% Ca, each having a liquidus point below 650°C, and **in that** the liquidus points of the two alloys are within less than 20°C of each other.

4. Method according to claim 3, **characterised in that** the liquidus points of the two alloys are below 600°C.

5. Method according to any of claims 1 to 4, **characterised in that** the lumps of each of the alloys are of different shapes or sizes.
